# EUROPEAN PATENT APPLICATION

(11) **EP 3 753 832 A1**
(43) Date of publication of application: **23.12.2020**
(21) Application number: 20172554.6
(22) Date of filing: 30.04.2020
(51) Int. Cl.: B62K 25/08, F16F 9/02, F16F 9/36, F16J 15/324, F16J 15/56

(54) **FRONT FORK SUSPENSION AND METHOD TO ASSEMBLE THE SAME**

(30) Priority: 20.06.2019 TW 108121593; 25.07.2019 TW 108126413
(71) Applicant: Chu, Pin-Chieh, Taichung City 438 (TW)
(72) Inventor: Chu, Pin-Chieh, Taichung City 438 (TW)
(74) Representative: Lang, Christian

(57) **Abstract**

A front fork suspension includes two outer tubes, two inner tubes, and two cushion springs. The two inner tubes are slidably inserted into the two outer tubes respectively. Top ends of the inner tubes are inserted into the outer tubes respectively. At least one first sealing member is sleeved onto a top end of each of the inner tubes and abuts against an inner wall of the outer tube. Each of the first sealing members includes a ring body and a first sealing portion. The ring body encloses an inner hole. The first sealing portion extends from a bottom portion of the ring body outward and upward to extend obliquely. An annular inner groove is enclosed by the ring body and the first sealing portion. At least the outer tube of the outer tube and the inner tube is injected with fluid therein. The two cushion springs are biased between the outer tubes and the inner tubes.

## Description

### BACKGROUND OF THE INVENTION

### Field of the Invention

The present invention relates to a front fork and a method to assemble the same, more especially to a front fork suspension and a method to assemble the same.

### Description of the Prior Art

To reduce the shock caused by the bumpy road during cycling, a suspension structure is usually installed in the front fork.

A conventional inverted fork has two fork tubes extendibly connected at two sides of the front wheels. The opposite end of the fork tube is connected to the fork crown. The fork crown is further connected to a steerer tube disposed on the bicycle rack and connected with the handle.

The fork tubes are disposed with springs or hydraulic structures therein. When the outer tube and the inner tube slide axially with respect to each other, the shock can be absorbed by the springs or hydraulic structures to make cycling comfortable. However, the structure of the front fork is complicated, as shown in patent TW M280340.

Besides, the front fork suspension disclosed in patent TW M254410 has a sealing sleeve disposed on the outer tube to reduce the friction between the inner tube and the outer tube and to prevent gas from leaking. In addition, the sealing sleeve partially covers the inner tube to prevent dust or water from entering the fork tubes.

However, the structure is still complicated, and the front fork is heavy. In addition, the cost is high, and performance of control is poor.

### SUMMARY OF THE INVENTION

The main object of the present invention is to provide a front fork suspension and a method to assemble a front fork suspension for better sealing, simpler structure, lower cost, and longer durability.

To achieve the above and other objects, the front fork suspension of the present invention includes two outer tubes, two inner tubes, and two cushion springs.

A front fork suspension includes two outer tubes, two inner tubes, and two cushion springs. The two inner tubes are slidably inserted into the two outer tubes respectively. Top ends of the inner tubes are inserted into the outer tubes respectively. At least one first sealing member is sleeved onto a top end of each of the inner tubes and abuts against an inner wall of the outer tube. Each of the first sealing members includes a ring body and a first sealing portion. The ring body encloses an inner hole. The first sealing portion extends from a bottom portion of the ring body outward and upward to extend obliquely. An annular inner groove is enclosed by the ring body and the first sealing portion. At least the outer tube of the outer tube and the inner tube is injected with fluid therein. The two cushion springs are biased between the outer tubes and the inner tubes.

To achieve the above and other objects, the method to assemble front fork suspension includes the following steps.

Prepare first sealing member: mount at least one first sealing member onto a piston, wherein the at least one first sealing member includes a ring body and a first sealing portion, the ring body encloses an inner hole, the first sealing portion extends from a bottom portion of the ring body outward and upward to extend obliquely, an annular inner groove is enclosed by the ring body and the first sealing portion.

Prepare front fork suspension: assemble a fork crown, two outer tubes, two supporting seats, two inner tubes, and two dropout seats into a front fork suspension wherein each of the inner tubes has the piston, place a cushion spring into a receiving space enclosed by the outer tube, the piston of the inner tube, and the supporting seat.

Prepare air chamber: mount a top cover having an injection hole onto a top end of each of the outer tubes, mount a bottom cover onto a bottom end of each of the inner tubes, install a second sealing member to make the second sealing member be sandwiched by an bottom end of each of the supporting seat and the inner tube, form an air chamber between an inner wall of the outer tube and the piston of the inner tube.

Inject high pressure gas: inject high pressure gas into the air chambers via the injection holes on the top covers.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a cross-section drawing of a front fork suspension of the present invention;
Fig. 2 is a partial enlargement of Fig. 1;
Fig. 3 is a partial enlargement of Fig. 2;
Fig. 4 is a stereogram of a first sealing member of the present invention;
Fig. 5 is a cross-section drawing of a first sealing member of the present invention;
Fig. 6 is a cross-section drawing of a first sealing member of a second embodiment of the present invention;
Fig. 7 is a partial cross-section drawing of a first sealing member of a second embodiment of the present invention;
Fig. 8 is an illustration showing an operation of the front fork suspension of the present invention;
Fig. 9 is a stereogram showing a fourth embodiment of the present invention;
Fig. 10 is a top view showing a fourth embodiment of the present invention;
Fig. 11 is a a-a cross-section of Fig. 10;
Fig. 12 is a breakdown drawing showing a top end of an inner tube and a first sealing member of a fourth embodiment of the present invention;
Fig. 13 is a flow chart of a method to assemble front fork suspension of the present invention.

### DETAILED DESCRIPTION OF THE PREFERRED EMBODIMENTS

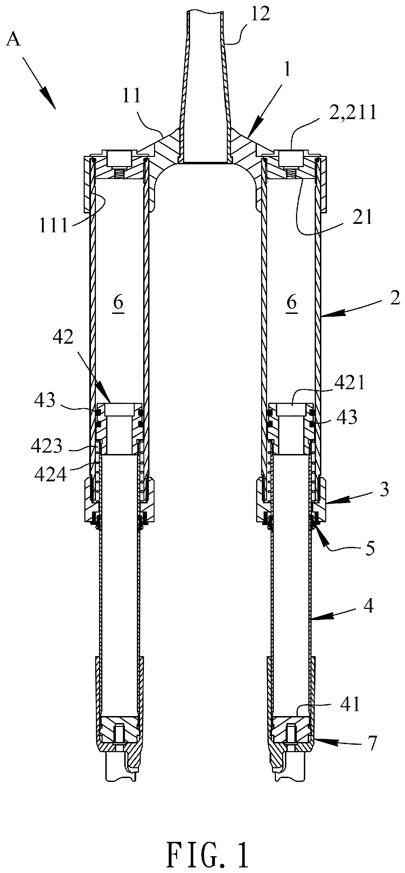

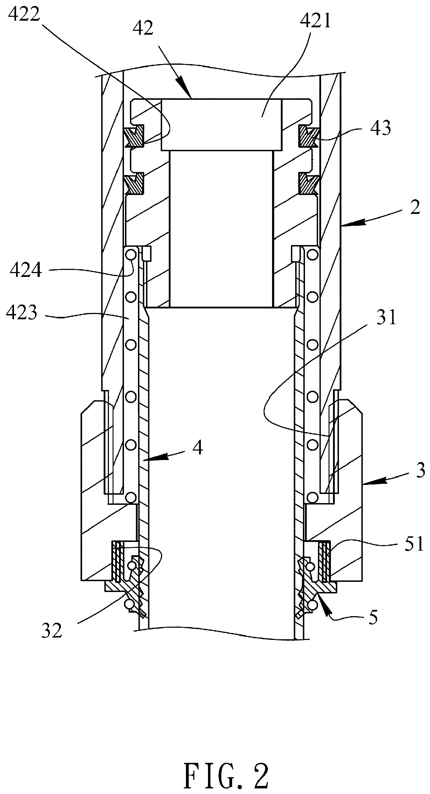

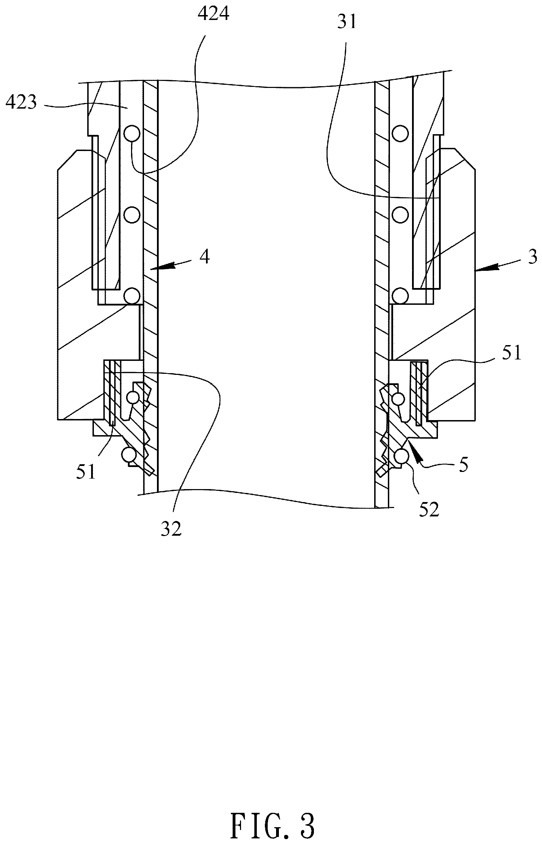

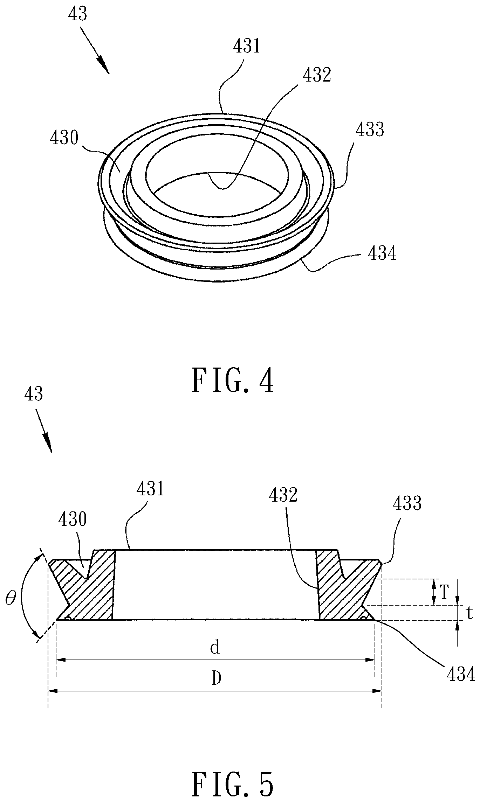

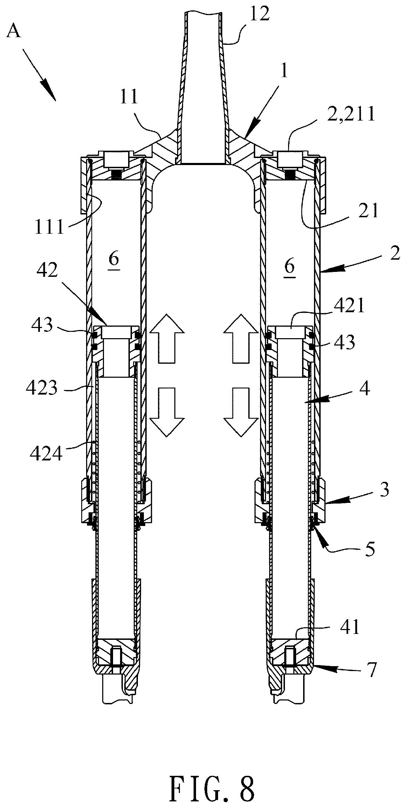

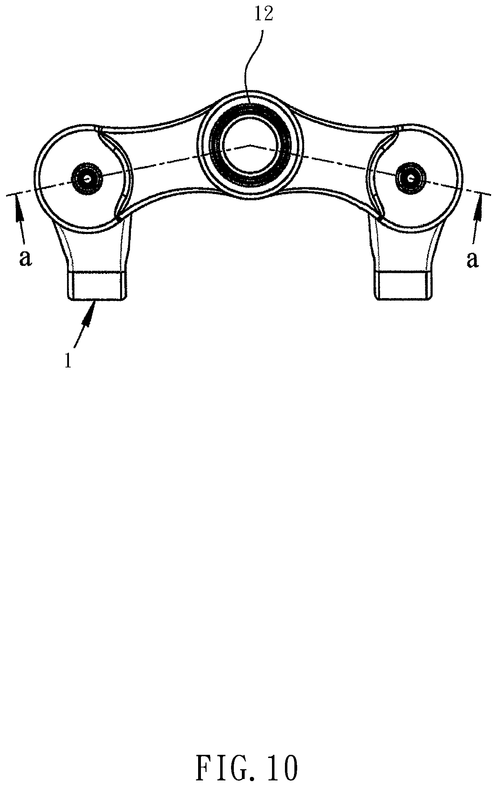

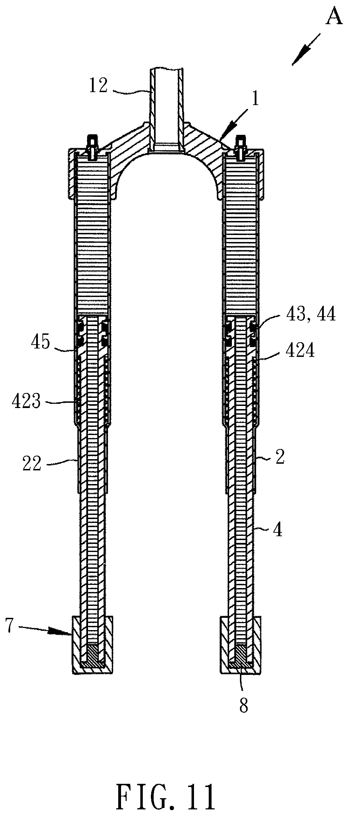

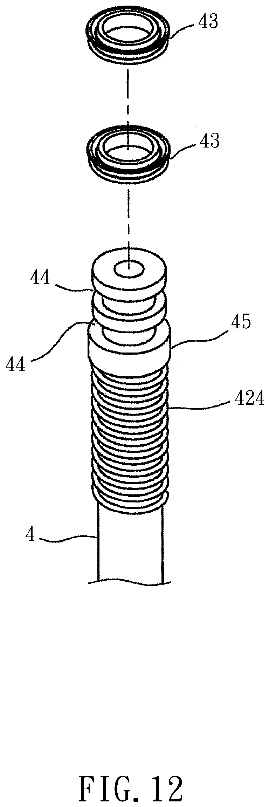

Please refer to Fig. 1 to Fig. 12, the front fork suspension A of the present invention includes a fork crown 1, two outer tubes 2, two inner tubes 4, and two dropout seats 7.

The fork crown 1 includes a main body 11. The main body 11 has a connecting hole 111 at each of two sides of a steerer tube 12. The two outer tubes 2 are connected to the two connecting holes 111 of the main body 11 respectively. A top cover 21 is disposed on a top end of each of the outer tubes 2. The top cover 21 is formed with an injection hole 211. A supporting seat 3 is connected to a bottom end of each of the outer tubes 2. The two inner tubes 4 are slidably inserted through the two supporting seats 3 respectively, and top ends of the inner tubes 4 being inserted into the outer tubes 2 respectively. A bottom cover 41 is disposed on a bottom end of each of the inner tubes 4. A piston 42 is disposed on the top end of each of the inner tubes 4. At least one first sealing member 43 is sleeved onto each of the pistons 42 and abuts against an inner wall of the outer tube 2. Each of the first sealing members 43 includes a ring body 431 and a first sealing portion 433. The ring body 431 encloses an inner hole 432. The first sealing portion 433 extends from a bottom portion of the ring body 431 outward and upward to extend obliquely. An annular inner groove 430 is enclosed by the ring body 431 and the first sealing portion 433. A second sealing member 5 is disposed on a bottom portion of each of the supporting seats 3 to be sandwiched by the inner tube 4 and the supporting seat 3. An air chamber 6 is defined between the inner wall of the outer tube 2 and the piston 42. The air chamber 6 is injected with high pressure gas, such as nitrogen. The two dropout seats 7 are connected to the bottom ends of the two inner tubes 4 respectively.

In the present embodiments, each of the supporting seats 3 has an upper groove 31 and a lower groove 32. The supporting seat 3 is sleeved onto the bottom end of the outer tube 2 by the upper groove 31 in order to connect with the outer tube 3. The second sealing member 5 is received in the lower groove 32. Specifically, each of the supporting seats 3 is tube-shaped and is formed with an annular rib on the inner wall thereof. The annular rib partitions the channel inside the supporting seat 3 into the upper groove 31 and the lower groove 32. On the other hand, a receiving space 423 is defined among the inner wall of the outer tube 2, a bottom end of the piston 42, and the supporting seat 3. A cushion spring 424 is received in the receiving space 423. Specifically, the receiving space 423 and the upper groove 31 overlap partially, and an end of the cushion spring abuts against the annular rib of the supporting seat.

Besides, to improve sealing, each of the second sealing members 5 is preferably disposed with an inner metal ring 51 therein, and a plurality of outer metal rings 52 are sleeved onto each of the second sealing members 5.

In the present embodiments, each of the first sealing members 43 is made of rubber, more preferably EPDM rubber (ethylene propylene diene monomer rubber). Besides, for better sealing and fixation, each of the pistons 42 is formed with at least one annular groove 422 on a peripheral face thereof, and the first sealing member 43 is sleeved onto the annular groove 422.

Preferably, each of the first sealing members 43 further includes a second sealing portion 434 located below the first sealing portion 433. An outer peripheral face of the second sealing portion 434 obliquely extends outward and downward from the first sealing portion 433. An angle θ between an outer peripheral face of the first sealing portion 433 and the outer peripheral face of the second sealing portion 434 is 80-110 degrees. The second sealing portion 434 of each of the first sealing members 43 has a maximum diameter smaller d than a maximum diameter D of the first sealing portion 433. A minimum thickness T of the first sealing portion 433 along an axial direction of the first sealing member 43 is larger than a thickness t of the second sealing portion 434 along the axial direction. Thereby, when the first sealing portion 433 is abraded, the second sealing portion 434 can help sealing to extend the life time of the first sealing member 43.

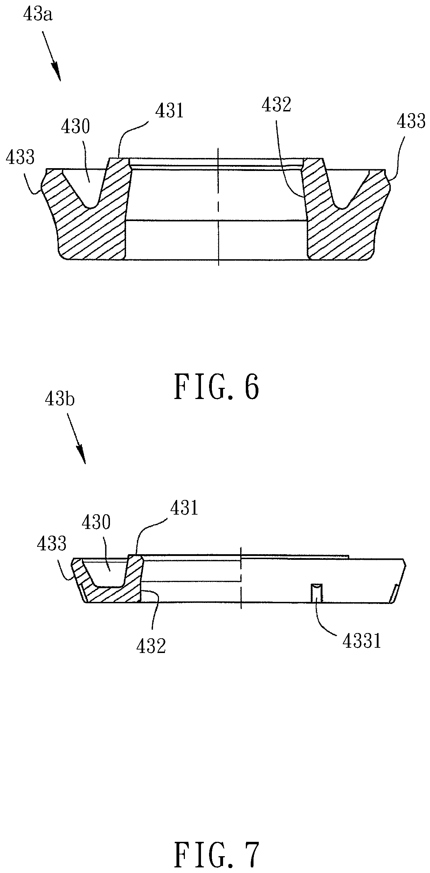

In other embodiment, as shown in Fig. 7, a plurality of positioning recesses 4331 are formed on a top end or an outer peripheral face of the first sealing portion 433 of each of the first sealing members 43b. The positioning recesses 4331 are adapted for receiving positioning protrusions formed on the inner wall of the outer tube 2. Thereby, the first sealing member 43b is prevented from rotating so that the sealing and the stability are improved.

Due to the high pressure gas in the air chamber 6, the outer tube 2 and the inner tube 4 are pushed to tend to move away from each other. Thus, the piston 42 pushes the cushion spring 424 for cushion and shock absorption. Practically, when the front fork suspension A is installed on a front wheel of a bike or a motorcycle, the bumpy road exerts a force upward on the front wheel, and the front wheel further exerts a force on the inner tube 4 to make the inner tube 4 move toward the outer tube 2 to compress the gas in the air chamber 6. At the same time, the inner tube 4 moves away from the cushion spring 424, and a restoring force is accumulated by the high pressure gas. When the force by the road is gone, the restoring force is exerted on the inner tube 4 to push the inner tube 4 outward. Thus, the piston 42 pushes the cushion spring 424, and the front wheel returns to the original position. Thereby, the shock is absorbed to make it comfortable during riding.

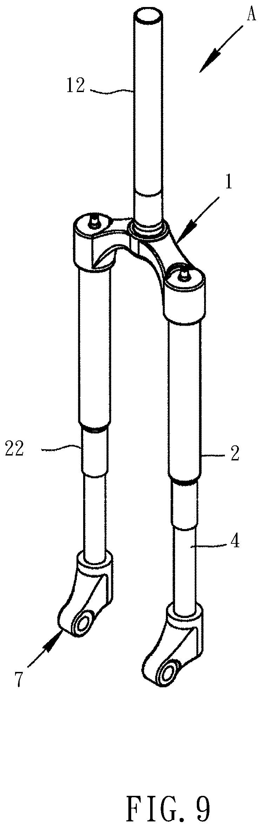

Please refer to Fig. 9 to Fig. 12, in this embodiment, the supporting seats and the pistons are absent. Each of the inner tubes (4) is formed with at least one annular groove (44). The at least one first sealing member (43) is sleeved onto the inner tubes to be embedded in the at least one annular groove (44). Preferably, a bottom end of each of the outer tubes (2) has a neck portion (22) corresponding to the inner tube (4). The neck portion (22) has a smaller diameter than a diameter of other portions of the outer tubes (2). The inner tube (4) is formed with a flange (45) on a peripheral face thereof. The flange (45) is located between the at least one annular groove (44) and the neck portion (22). A receiving space (423) is defined between the flange (45) and the neck portion (22). The cushion spring (424) is received in the receiving space (423). Besides, a third sealing member (8) is disposed on a bottom end of each of the inner tubes (4), and two dropout seats (7) cover the two third sealing members (8) respectively. All the outer tubes (2) and the inner tubes (4) are injected with fluid. Thereby, this embodiment can provide similar performance but has a simpler structure.

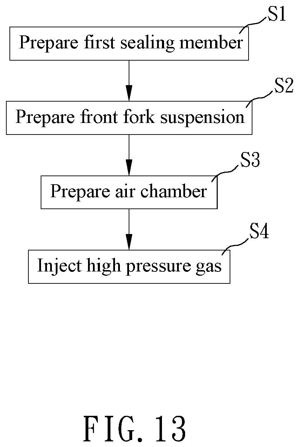

The present invention also provides method to assemble front fork suspension includes the following steps, as shown in Fig. 1 to Fig 13.

Prepare first sealing member S1: mount at least one first sealing member 43 onto a piston 42, wherein the at least one first sealing member 43 includes a ring body 431 and a first sealing portion 433, the ring body 431 encloses an inner hole 432, the first sealing portion 433 extends from a bottom portion of the ring body 431 outward and upward to extend obliquely, an annular inner groove 430 is enclosed by the ring body 431 and the first sealing portion 433.

Prepare front fork suspension S2: assemble a fork crown 1, two outer tubes 2, two supporting seats 3, two inner tubes 4, and two dropout seats 7 into a front fork suspension A wherein each of the inner tubes 4 has the piston 42, place a cushion spring 424 into a receiving space 423 enclosed by the outer tube 2, the piston 42 of the inner tube 4, and the supporting seat 3.

Prepare air chamber S3: mount a top cover 21 having an injection hole 211 onto a top end of each of the outer tubes 2, mount a bottom cover 41 onto a bottom end of each of the inner tubes 4, install a second sealing member 5 to make the second sealing member 5 be sandwiched by an bottom end of each of the supporting seat 3 and the inner tube 4, form an air chamber 6 between an inner wall of the outer tube 2 and the piston 42 of the inner tube 4.

Inject high pressure gas S4: inject high pressure gas into the air chambers 6 via the injection holes 211 on the top covers 21.

Preferably, each of the first sealing members 43 further includes a second sealing portion 434 located below the first sealing portion 433. An outer peripheral face of the second sealing portion 434 obliquely extends outward and downward from the first sealing portion 433. An angle θ between an outer peripheral face of the first sealing portion 433 and the outer peripheral face of the second sealing portion 434 is 80-110 degrees. The second sealing portion 434 of each of the first sealing members 43 has a maximum diameter d smaller than a maximum diameter D of the first sealing portion 433. A minimum thickness T of the first sealing portion 433 along an axial direction of the first sealing member 43 is larger than a thickness t of the second sealing portion 434 along the axial direction.

In conclusion, the front fork suspension of the present invention uses high pressure gas to replace the conventional spring or hydraulic structure, so the durability and the stability are improved. In addition, the front fork suspension of the present invention has a simpler structure and is easy to manufacture. Besides, the special first sealing member can improve sealing and wear resistance.

## Claims

1. A front fork suspension (A), including:
two outer tubes (2);
two inner tubes (4), slidably inserted into the two outer tubes (2) respectively, top ends of the inner tubes (4) being inserted into the outer tubes (2) respectively, at least one first sealing member (43,43a,43b) being sleeved onto a top end of each of the inner tubes (4) and abutting against an inner wall of the outer tube (2), each of the first sealing members (43,43a,43b) including a ring body (431) and a first sealing portion (433), the ring body (431) enclosing an inner hole (432), the first sealing portion (433) extending from a bottom portion of the ring body (431) outward and upward to extend obliquely, an annular inner groove (430) being enclosed by the ring body (431) and the first sealing portion (433), at least the outer tube (2) of the outer tube (2) and the inner tube (4) being injected with fluid therein; and
two cushion springs (424), biased between the outer tubes (2) and the inner tubes (4).

2. The front fork suspension of claim 1, further including a fork crown (1) and two dropout seats (7), the fork crown (1) including a main body (11), the main body (11) having a connecting hole (111) at each of two sides thereof, the two outer tubes (2) being connected to the two connecting holes (111) of the main body (11) respectively, a top cover (21) being disposed on a top end of each of the outer tubes (2), the top cover (21) being formed with an injection hole (211), a supporting seat (3) being connected to a bottom end of each of the outer tubes (2), the two inner tubes (4) being slidably inserted through the two supporting seats (3) respectively, a bottom cover (41) being disposed on a bottom end of each of the inner tubes (4), a piston (42) being disposed on the top end of each of the inner tubes (4), the at least one first sealing member (43,43a,43b) being sleeved onto each of the pistons (42) and abutting against an inner wall of the outer tube (2), a second sealing member (5) being disposed on a bottom portion of each of the supporting seats (3) to be sandwiched by the inner tube (4) and the supporting seat (3), an air chamber (6) being defined between the inner wall of the outer tube (2) and the piston (42), the air chamber (6) being injected with high pressure gas, the two dropout seats (7), connected to the bottom ends of the two inner tubes (4) respectively.

3. The front fork suspension of claim 2, wherein each of the supporting seats (30 has an upper groove (31) and a lower groove (32), the supporting seat (3) is sleeved onto the bottom end of the outer tube (2) by the upper groove (31) in order to connect with the outer tube (2), the second sealing member (5) is received in the lower groove (32).

4. The front fork suspension of claim 2, wherein each of the second sealing members (5) is disposed with an inner metal ring (51) therein, a plurality of outer metal rings (52) are sleeved onto each of the second sealing members (5).

5. The front fork suspension of claim 2, wherein a receiving space (423) is defined among the inner wall of the outer tube (2), a bottom end of the piston (42), and the supporting seat (3), the cushion spring (424) is received in the receiving space (423).

6. The front fork suspension of claim 2, wherein each of the first sealing members (43,43a,43b) is made of rubber, each of the pistons (42) is formed with at least one annular groove (422) on a peripheral face thereof, the first sealing member (43,43a,43b) is sleeved onto the annular groove (422).

7. The front fork suspension of claim 1, wherein each of the first sealing members (43) further includes a second sealing portion (434) located below the first sealing portion (433), an outer peripheral face of the second sealing portion (434) obliquely extends outward and downward from the first sealing portion (433), an angle (θ) between an outer peripheral face of the first sealing portion (433) and the outer peripheral face of the second sealing portion (434) is 80-110 degrees.

8. The front fork suspension of claim 7, wherein the second sealing portion (434) of each of the first sealing members (43) has a maximum diameter (d) smaller than a maximum diameter (D) of the first sealing portion (433), a minimum thickness (T) of the first sealing portion (433) along an axial direction of the first sealing member (43) is larger than a thickness (t) of the second sealing portion (434) along the axial direction.

9. The front fork suspension of claim 1, wherein each of the first sealing members (43b) is made of rubber, a plurality of positioning recesses (4331) are formed on a top end or an outer peripheral face of the first sealing portion (433) of each of the first sealing members (43b).

10. The front fork suspension of claim 6 or 9, wherein each of the first sealing members (43,43a,43b) is made of EPDM rubber (ethylene propylene diene monomer rubber).

11. The front fork suspension of claim 1, wherein each of the inner tubes (4) is formed with at least one annular groove (44), the at least one first sealing member (43) is sleeved onto the inner tubes to be embedded in the at least one annular groove (44).

12. The front fork suspension of claim 11, wherein a bottom end of each of the outer tubes (2) has a neck portion (22) corresponding to the inner tube (4), the neck portion (22) has a smaller diameter than a diameter of other portions of the outer tubes (2), the inner tube (4) is formed with a flange (45) on a peripheral face thereof, the flange (45) is located between the at least one annular groove (44) and the neck portion (22), a receiving space (423) is defined between the flange (45) and the neck portion (22), the cushion spring (424) is received in the receiving space (423).

13. The front fork suspension of claim 11, wherein a third sealing member (8) is disposed on a bottom end of each of the inner tubes (4), two dropout seats (7) cover the two third sealing members (8) respectively, all the outer tubes (2) and the inner tubes (4) are injected with fluid.

14. A method to assemble front fork suspension, including steps of:
preparing first sealing member (S1): mounting at least one first sealing member (43,43a,43b) onto a piston (42), wherein the at least one first sealing member (43,43a,43b) includes a ring body (431) and a first sealing portion (433), the ring body (431) encloses an inner hole (432), the first sealing portion (433) extends from a bottom portion of the ring body (431) outward and upward to extend obliquely, an annular inner groove (430) is enclosed by the ring body (431) and the first sealing portion (433);
preparing front fork suspension (S2): assembling a fork crown (1), two outer tubes (2), two supporting seats (3), two inner tubes (4), and two dropout seats (7) into a front fork suspension (A) wherein each of the inner tubes (4) has the piston (42), placing a cushion spring (424) into a receiving space (423) enclosed by the outer tube (2), the piston (42) of the inner tube (4), and the supporting seat (3);
preparing air chamber (S3): mounting a top cover (21) having an injection hole (211) onto a top end of each of the outer tubes (2), mounting a bottom cover (41) onto a bottom end of each of the inner tubes (4), installing a second sealing member (5) to make the second sealing member (5) be sandwiched by an bottom end of each of the supporting seat (3) and the inner tube (4), forming an air chamber (6) between an inner wall of the outer tube (2) and the piston (42) of the inner tube (4);
injecting high pressure gas (S4): injecting high pressure gas into the air chambers (6) via the injection holes (211) on the top covers (21).

15. The method to assemble front fork suspension of claim 1, wherein each of the first sealing members (43) further includes a second sealing portion (434) located below the first sealing portion (433), an outer peripheral face of the second sealing portion (434) obliquely extends outward and downward from the first sealing portion (433), an angle (θ) between an outer peripheral face of the first sealing portion (433) and the outer peripheral face of the second sealing portion (434) is 80-110 degrees, the second sealing portion (434) of each of the first sealing members (43) has a maximum diameter (d) smaller than a maximum diameter (D) of the first sealing portion (433), a minimum thickness (T) of the first sealing portion (433) along an axial direction of the first sealing member (43) is larger than a thickness (t) of the second sealing portion (434) along the axial direction.
